# EUROPÄISCHE PATENTSCHRIFT

(11) **EP 3 255 281 B1**
(45) Veröffentlichungstag und Bekanntmachung des Hinweises auf die Patenterteilung: **22.03.2023**
(21) Anmeldenummer: 17000947.6
(22) Anmeldetag: 02.06.2017
(51) Int. Cl.: F04D 25/08, F04D 29/54, F04D 29/70

(54) **VENTILATOR MIT TANDEMNACHLEITSCHAUFELN**
VENTILATOR WITH TANDEM DIFFUSER BLADES
VENTILATEUR AVEC AUBES DE DIFFUSEUR TANDEM

(30) Priorität: 08.06.2016 DE 102016007205
(43) Veröffentlichungstag der Anmeldung: 13.12.2017
(73) Patentinhaber: ZIEHL-ABEGG SE, 74653 Künzelsau (DE)
(72) Erfinder: Gauss, Tobias, 74676 Niedernhall (DE); Seifried, Daniel, 74523 Schwäbisch Hall (DE); Bitz, Thomas, 74653 Künzelsau (DE)
(74) Vertreter: Kohl, Karl-Heinz

(56) Entgegenhaltungen:
- EP-B1- 1 367 262
- DE-A1-102014 101 184
- DE-U1-202006 021 186
- US-A1- 2009 060 732
- US-A1- 2009 226 299
- US-A1- 2014 314 559

## Beschreibung

Die Erfindung betrifft eine Ventilatoreinheit nach dem Oberbegriff des Anspruches 1.

Sowohl in der Lebensmittelindustrie als auch in der Viehzucht werden Ventilatoren mit hohen Wurfweiten benötigt, um die Luft gleichmäßig im Raum zu verteilen. Aufgrund der immer strengeren Ökodesign-Richtlinie (ErP-Richtlinie 2009/125/EC) werden Ventilatoren mit speziellen Nachleiträdern verwendet, um die Effizienz zu steigern (EP 2 418 388 A2). Die Wurfweite kann allerdings mit solchen speziellen Nachleiträdern nicht signifikant erhöht werden.

Um die Wurfweite zu erhöhen, werden üblicherweise Nachleiträder eingesetzt, die im Spritzgussverfahren hergestellt sind. Mit Hilfe eines solchen Nachleitrades kann der Drall reduziert und damit der Luftstrom axial gerichtet werden. Dadurch wird auch die Wurfweite erhöht. Für jede Ventilatorbaugröße wird ein eigenes Nachleitrad benötigt, das üblicherweise auch nur auf ein Schutzgitter/Traggitter passt.

Das Nachleitrad wird in Strömungsrichtung hinter einem Berührschutz angebracht (EP 1 367 262 B1). Der Sicherheitsabstand zwischen dem Berührschutz und dem Ventilator ist bei solchen Ventilatoreinheiten gering. Dadurch muss aber der Ringabstand des Berührschutzes nach DIN EN ISO 13857 entsprechend klein sein. Durch die geringen Ringabstände sinkt allerdings der Wirkungsgrad der Ventilatoreinheit im Vergleich zu einer Ventilatoreinheit mit einem Berührschutz mit großem Ringabstand. Der geringe Ringabstand steht der Erhöhung der Wurfweite entgegen.

Bei der gattungsgemäßen Ventilatoreinheit (DE 20 2006 021 186 U1) hat der erste Nachleitapparat V-förmige Schaufeln, während der zweite Nachleitapparat eine Vielzahl von zylindrischen Rohren aufweist.

Bei einer anderen bekannten Ventilatoreinheit (US 2014/031 4559 A1) hat der Nachleitapparat zwei Teile, die unterschiedlich lang sind.

Bei einer anderen bekannten Ventilatoreinheit (US 2009/0060732 A1) ist ein Nachleitapparat vorgesehen, der Profilierte Nachleitschaufeln aufweist. Sie haben einen axial sich erstreckenden Teil, der in einen gekrümmten Teil übergeht.

Der Erfindung liegt die Aufgabe zugrunde, die gattungsgemäße Ventilatoreinheit so auszubilden, dass mit einfachen konstruktiven Maßnahmen die Wurfweite der Ventilatoreinheit signifikant erhöht werden kann.

Diese Aufgabe wird bei der gattungsgemäßen Ventilatoreinheit erfindungsgemäß mit den kennzeichnenden Merkmalen des Anspruches 1 gelöst.

Bei der erfindungsgemäßen Ventilatoreinheit sind zwei Nachleitapparate vorgesehen, wobei der weitere Nachleitapparat dem im Ventilatorgehäuse untergebrachten Nachleitapparat zugeordnet ist. Durch den weiteren Nachleitapparat lässt sich die Wurfweite der erfindungsgemäßen Ventilatoreinheit signifikant erhöhen. Mit dem weiteren Nachleitapparat können die Anforderungen, die die Ökodesign-Richtlinie stellt, problemlos eingehalten werden.

Besonders gute Wurfweiten und Akustikwerte ergeben sich dadurch, dass das Schaufelhöhenverhältnis H = h_{N1max}/h_{N2max} zwischen 0,2 und 2,5, vorzugsweise zwischen 0,4 und 2, liegt, wobei h_{N1max} die maximale Höhe der Nachleitschaufeln im Gehäuse und h_{N2max} die maximale Höhe der weiteren Nachleitschaufeln ist. Eine einfache Befestigung der weiteren Nachleitschaufeln ergibt sich dadurch, dass sie zumindest über einen Teil ihrer Länge auf wenigstens einem stabförmigen Träger angeordnet sind.

Der stabförmige Träger wird so am Schutzgitter befestigt, dass er koaxial zueinander liegende Ringe des Schutzgitters miteinander verbindet. Der stabförmige Träger dient somit nicht nur zur Halterung und Befestigung der weiteren Nachleitschaufeln, sondern auch zur Stabilisierung des Schutzgitters.

Wie in Anspruch 1 definiert wird, weist der weitere Nachleitapparat weitere Nachleitschaufeln auf, mit denen je nach Formgebung und/oder Anordnung die Wurfweite der Ventilatoreinheit an den gewünschten Einsatzzweck einfach angepasst werden kann.

Wie in Anspruch 1 definiert wird, ist der weitere Nachleitapparat Teil eines Schutzgitters, mit dem der Berührschutz an der Ventilatoreinheit erreicht wird. Da der weitere Nachleitapparat Bestandteil des Schutzgitters ist, kann der weitere Nachleitapparat in einfacher Weise zusammen mit der Befestigung des Schutzgitters an der Ventilatoreinheit in seine Einbaulage gebracht werden. Mit dem Schutzgitter ist es möglich, vorhandene Ventilatoreinheiten nachträglich mit dem weiteren Nachleitapparat auszurüsten. Für den Anwender besteht dadurch sehr einfach die Möglichkeit, vorhandene Ventilatoreinheiten so umzurüsten, dass mit ihnen die erforderlichen hohen Wurfweiten erreicht werden.

Um die Wurfweitenerhöhung zu optimieren, ist es von Vorteil, wenn die weiteren Nachleitschaufeln im Wesentlichen hochkant angeordnet sind. Dann liegen die weiteren Nachleitschaufeln in Strömungsrichtung, wodurch der Luftstrom im Wesentlichen axial ausgerichtet wird. Dies trägt zu einer hohen Wurfweite bei. Unter hochkanter Anordnung ist zu verstehen, dass die weiteren Nachleitschaufeln nicht nur senkrecht, sondern auch geneigt angeordnet sein können.

Die weiteren Nachleitschaufeln können in einfacher Weise aus Blechteilen bestehen. Dann lassen sich die Nachleitschaufeln beispielsweise durch Stanzen oder auch durch Laserschneiden und dergleichen sehr einfach und kostengünstig aus Blechen herstellen.

Es ist aber auch möglich, die weiteren Nachleitschaufeln aus Kunststoffteilen zu fertigen, insbesondere im Spritzgussverfahren.

Eine sehr einfache und kostengünstige Ausbildung ergibt sich, wenn die weiteren Nachleitschaufeln eben ausgebildet sind. Dann können beispielsweise aus einem Blech herausgetrennte Nachleitschaufeln ohne weitere Nachbearbeitung oder Nachverformung unmittelbar zur Verwendung als Nachleitschaufeln eingesetzt werden.

Es ist aber auch möglich, die weiteren Nachleitschaufeln zumindest im Bereich ihrer dem Luftstrom zugewandten Vorderkante gekrümmt verlaufend auszubilden. Es besteht dadurch die Möglichkeit durch entsprechende Formgestaltung der weiteren Nachleitschaufeln Einfluss auf die Höhe der Wurfweite zu nehmen.

Bei einer einfachen Ausführungsform verläuft die dem Luftstrom zugewandte Vorderkante der weiteren Nachleitschaufeln gerade.

Es ist darüber hinaus möglich, diese dem Luftstrom zugewandte Vorderkante der weiteren Nachleitschaufeln profiliert auszubilden, beispielsweise gewellt oder gezackt zu gestalten. Somit kann nicht nur durch die Formgebung der weiteren Nachleitschaufeln, sondern auch durch eine besondere Gestaltung der Vorderkante Einfluss auf die Höhe der Wurfweite und auf die Akustik genommen werden. Je nach Ausbildung der Ventilatoreinheit stehen daher dem Anwender bzw. dem Hersteller der Ventilatoreinheit verschiedene Parameter zur Verfügung, um die gewünschte Wurfweite für den vorgesehenen Einsatzfall einzustellen.

Bei einer einfachen und vorteilhaften Ausführungsform sind zwei einander gegenüber liegende weitere Nachleitschaufeln einstückig miteinander ausgebildet. Dies hat den Vorteil, dass bei der Herstellung gleichzeitig zwei weitere Nachleitschaufeln im gleichen Arbeitsschritt montiert werden.

Bevorzugt sind in diesem Falle die einander gegenüber liegenden weiteren Nachleitschaufeln Teil einer flachen Leiste. Sie kann aus Blech oder auch aus Kunststoff bestehen. Ist die Leiste aus Blech gefertigt, kann sie einfach aus Blech durch einen Stanz- oder einen Schneidvorgang, insbesondere durch einen Laserschneidvorgang, kostengünstig hergestellt werden. Die flache Leiste gewährleistet eine hohe Stabilität und einfache Befestigung der weiteren Nachleitschaufeln.

Werden mehrere Leisten eingesetzt, dann sind diese Leisten vorteilhaft in halber Länge einander kreuzend miteinander verbunden. Dies kann beispielsweise dadurch erreicht werden, dass diese Leisten in halber Länge jeweils einen Querschlitz aufweisen, über den die einander kreuzenden Leisten formschlüssig zusammengesteckt werden können.

Über die Zahl der weiteren Nachleitschaufeln kann ebenfalls Einfluss auf die Größe der Wurfweite genommen werden. Somit steht dem Hersteller nicht nur als Auswahlkriterium die Form der weiteren Nachleitschaufeln und/oder die Gestaltung der Vorderkante als Einstellkriterium zur Verfügung, sondern auch die Zahl der weiteren Nachleitschaufeln. Durch entsprechende Abstimmung dieser verschiedenen Größen lässt sich für jede Ventilatoreinheit die gewünschte optimale Wurfweite bestimmen und einstellen.

Ist der weitere Nachleitapparat Teil des Schutzgitters, dann ist es von Vorteil, wenn sich die Leisten über die ganze Breite bzw. über den ganzen Durchmesser des Schutzgitters erstrecken. Dann tragen die Leisten auch zur Stabilität des Schutzgitters bei.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert.

Es zeigen
- Fig. 1: in perspektivischer Darstellung eine erste Ausführungsform eines Schutzgitters, das mit einem Nachleitapparat versehen ist,
- Fig. 2: in perspektivischer Darstellung eine zweite Ausführungsform eines Schutzgitters, das mit einer zweiten Ausführungsform eines Nachleitapparates versehen ist,
- Fig. 3: in perspektivischer Darstellung den Nachleitapparat gemäß Fig. 2,
- Fig. 4 bis 7: jeweils in perspektivischer Darstellung weitere Ausführungsformen von Schutzgittern, die mit weiteren Ausführungsformen von Nachleitapparaten versehen sind,
- Fig. 8: in perspektivischer Darstellung eine erste Ausführungsform einer nicht erfindungsgemäßen Ventilatoreinheit,
- Fig. 9: die Ventilatoreinheit gemäß Fig. 8 in Explosionsdarstellung,
- Fig. 10 und 11: in Darstellungen entsprechend den Fig. 8 und 9 eine weitere Ausführungsform einer nicht erfindungsgemäßen Ventilatoreinheit,
- Fig. 12 und 13: in Darstellungen entsprechend den Fig. 8 und 9 eine weitere Ausführungsform einer erfindungsgemäßen Ventilatoreinheit,
- Fig. 14 und 15: in Darstellungen entsprechend den Fig. 8 und 9 eine weitere Ausführungsform einer erfindungsgemäßen Ventilatoreinheit,
- Fig. 16 und 17: jeweils im Halbschnitt und in schematischer Darstellung unterschiedliche Ausführungsformen von Ventilatoreinheiten,
- Fig. 18: in einem Diagramm die axiale Geschwindigkeit des von der Ventilatoreinheit erzeugten Luftstromes in Abhängigkeit von der Entfernung zur Ventilatoreinheit.

Die nachfolgend beschriebenen Ausführungsbeispiele zeigen Ventilatoreinheiten, die sich dadurch auszeichnen, dass sie zwei in Strömungsrichtung der Luft hintereinander angeordnete Nachleitapparate aufweisen. Mit dem in Strömungsrichtung der Luft hinter dem ersten Nachleitapparat vorgesehenen zweiten Nachleitapparat wird eine sehr hohe Wurfweite erreicht. Die beiden Nachleitapparate sorgen dafür, dass die Luft gleichmäßig und weit im jeweiligen Raum verteilt wird. Diese hohe Wurfweite der Ventilatoreinheit wird mit konstruktiv einfachen Maßnahmen in Form des zweiten Nachleitapparates erreicht.

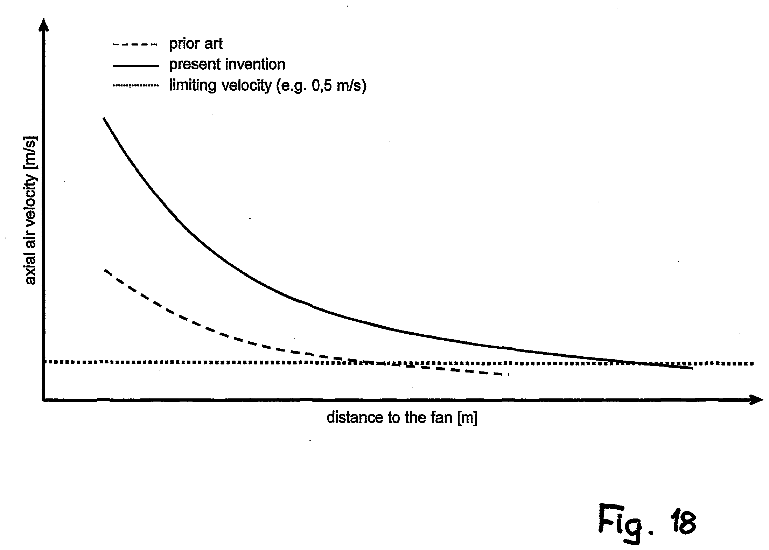

Fig. 18 zeigt die Abhängigkeit der Wurfweite von der Axialluftgeschwindigkeit. Die gestrichelte Linie kennzeichnet herkömmliche Ventilatoreinheiten, während mit der ausgezogenen Linie die erfindungsgemäße Ventilatoreinheit gekennzeichnet ist. Deutlich wird, dass bei jeder axialen Luftgeschwindigkeit die Wurfweite wesentlich größer ist als bei den bekannten Ventilatoreinheiten.

Mit der gepunkteten Linie ist die Grenzgeschwindigkeit angegeben, die üblicherweise bei 0,5 m/s liegt, bei der die Wurfgeschwindigkeit nicht mehr gemessen wird, da ihre Werte in diesem Bereich zu sehr schwanken.

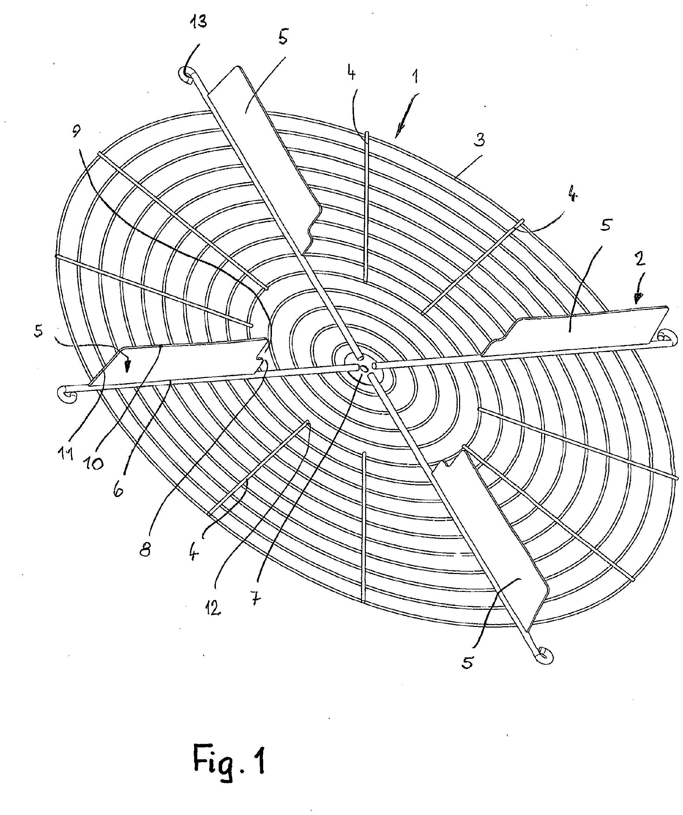

Fig. 1 zeigt ein Schutzgitter 1, an dem ein Nachleitapparat 2 angebracht ist. Das Schutzgitter 1 hat koaxial zueinander liegende Ringe 3, die im Ausführungsbeispiel gleichen Abstand voneinander haben. Der Abstand der Ringe 3 ist so gewählt, dass ein zuverlässiger Berührschutz gegeben ist. Die Ringe 3 sind durch Streben 4 miteinander verbunden, die in Abständen längs des Umfanges des Schutzgitters 1 vorgesehen sind. Im Ausführungsbeispiel erstrecken sich die Streben 4 radial und sind an den Kreuzungspunkten mit den Ringen 3 fest verbunden.

Abweichend vom dargestellten Ausführungsbeispiel können die Streben 4 auch unter einem Winkel zur jeweiligen Radialen liegen.

Die Streben 4 erstrecken sich über den größten Teil der Ringe 3. Die Streben 4 können sich aber auch über die gesamte radiale Breite des Schutzgitters erstrecken, so dass alle Ringe 3 durch die Streben 4 miteinander verbunden sind.

Die Ringe 3 und die Streben 4 bestehen vorteilhaft aus metallischem Material, insbesondere aus einem Draht. In diesem Falle werden die Ringe 3 und die Streben 4 an ihren Kreuzungspunkten miteinander verschweißt. Die Ringe 3 und die Streben 4 können auch aus Kunststoff bestehen.

Der Nachleitapparat 2 ist an der einen Seite des Schutzgitters 1 befestigt. Er hat vier Nachleitschaufeln 5, die jeweils gleich ausgebildet sind. Sie liegen in Winkelabständen von 90° zueinander. Sie werden vorteilhaft aus Blech gefertigt, vorzugsweise aus einem Blechband gestanzt. Die Nachleitschaufeln 5 können aber auch aus flachen Kunststoffteilen bestehen, die vorteilhaft im Spritzgussverfahren hergestellt werden.

Die Nachleitschaufeln 5 sitzen auf stabförmigen Trägern 6, die sich radial erstrecken und jeweils unter 90° zueinander liegen. Die Träger 6 liegen mittig zwischen zwei benachbarten Streben 4. Die Träger 6 dienen nicht nur zur Befestigung der Nachleitschaufeln 5, sondern verbinden auch die Ringe 3 des Schutzgitters 1 miteinander. Im Unterschied zu den Streben 4 erstrecken sich die Träger 6 über sämtliche Ringe 3.

Die inneren Enden der Träger 6 sind auf einer zentralen Kreisplatte 7 befestigt, die mit Abstand vom innersten Ring 3 des Schutzgitters 1 umgeben wird. Die Träger 6 lassen sich mit ihrem inneren Ende über eine ausreichende Länge fest auf der Kreisplatte 7 befestigen.

Die Nachleitschaufeln 5 haben etwa rechteckigen Umriss und sind hochkant auf den Trägern 6 vorgesehen. Die Nachleitschaufeln 5 sind an ihrer radial inneren Schmalseite 8 mit einer Vertiefung 9 versehen, die sich bis zur vom Schutzgitter 3 entfernt liegenden Längsseite 10 erstreckt.

Die radial innere Schmalseite 8 liegt mit Abstand von der zentralen Kreisplatte 7, während die gegenüberliegende, radial äußere Schmalseite 11 der Nachleitschaufeln 5 radial außerhalb des äußeren Ringes 3 des Schutzgitters 1 liegt. Im Ausführungsbeispiel liegt die radial innere Schmalseite 8 etwa in Höhe der inneren Enden 12 der Streben 4. Diese Ausbildung ist nicht zwingend. Je nach Durchmesser der Nabe der Ventilatoreinheit kann die Anordnung und Ausbildung der Nachleitschaufeln 5 anders gestaltet sein.

Die Verteilung der Streben 4 sowie der Träger 6 ist so vorgesehen, dass diese in gleichen Winkelabständen über den Umfang des Schutzgitters 1 vorgesehen sind.

Abweichend vom dargestellten Ausführungsbeispiel können die Nachleitschaufeln auch ohne die Vertiefung 9 an der Schmalseite 8 vorgesehen sein.

Die Träger 6 ragen radial nach außen über die Nachleitschaufeln 5 sowie über den äußeren Ring 3 des Schutzgitters 1 vor und sind als Befestigungselemente 13 ausgebildet, mit denen das gesamte Schutzgitter 1 mit Nachleitapparat 2 an der Ventilatoreinheit befestigt werden kann.

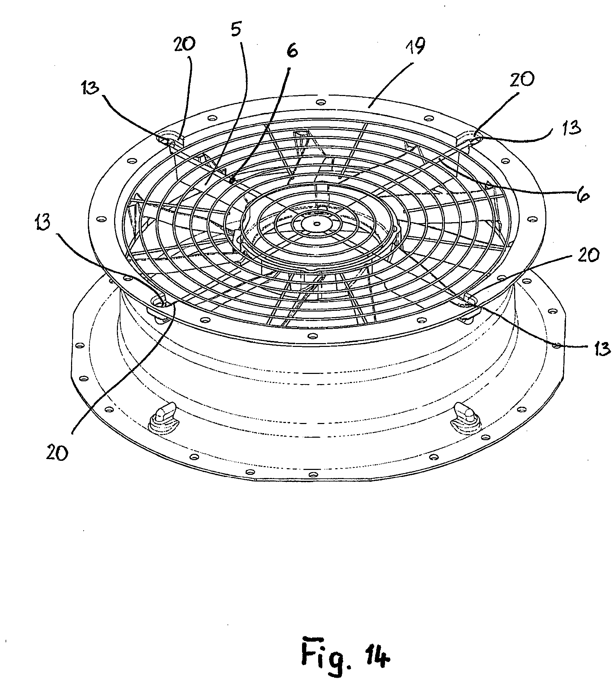

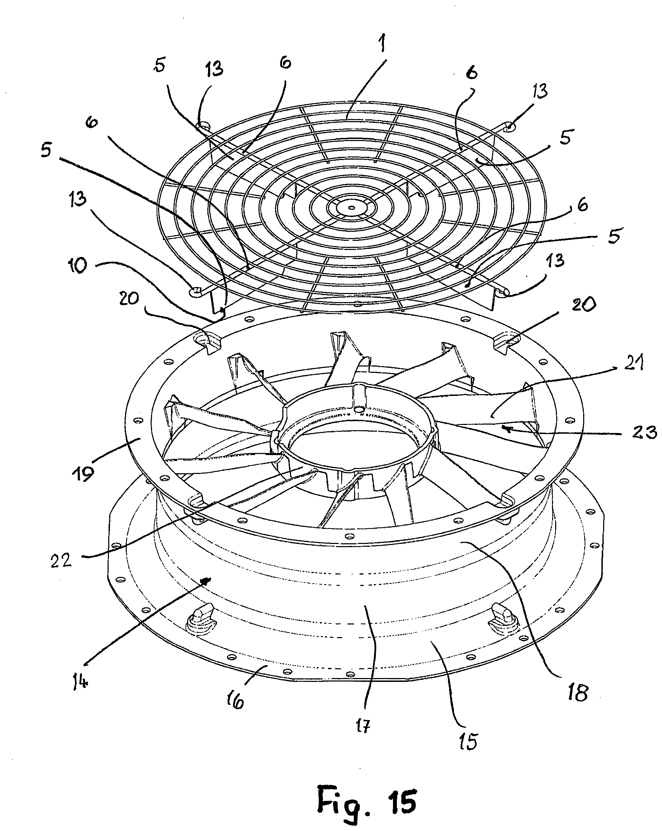

Die Fig. 14 und 15 zeigen dieses Schutzgitter 1, wie es mit der Ventilatoreinheit verbunden ist. Die Ventilatoreinheit hat ein Gehäuse 14, das an einem Ende als Einlaufdüse 15 ausgebildet ist. Sie geht in einen Befestigungsflansch 16 über, mit dem das Gehäuse 14 und damit die gesamte Ventilatoreinheit auf einem Aggregat oder dergleichen in bekannter Weise befestigt werden kann. Die Einlaufdüse 15 geht in einen zylindrischen Bereich 17 über, der die Einlaufdüse 15 mit einem Diffusor 18 verbindet, der sich in Strömungsrichtung der Luft stetig erweitert. An den Diffusor 18 schließt ein ringförmiger Befestigungsflansch 19 an. Er weist über seinen Umfang verteilt Vertiefungen 20 auf, in welche die Befestigungselemente 13 der Träger 6 des Nachleitapparates 2 eingreifen (Fig. 14). In den Vertiefungen 20 werden die Befestigungselemente 13 in geeigneter Weise befestigt.

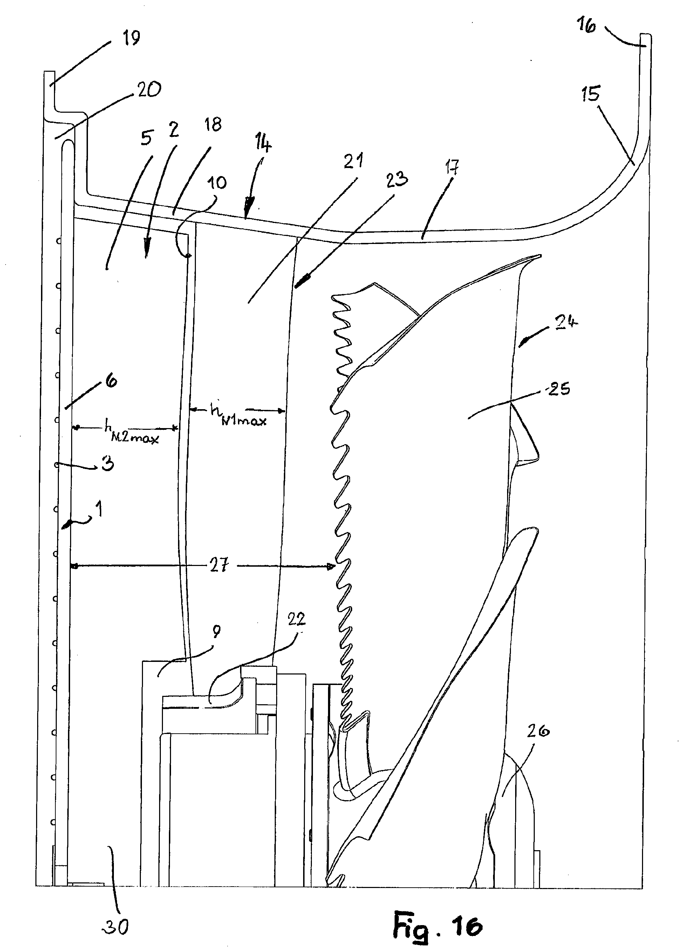

An der Innenwand des Diffusors 18 sind weitere Nachleitschaufeln 21 befestigt, die über den Umfang des Diffusors 18 verteilt angeordnet sind und den Diffusor 18 mit einer ringförmigen Aufnahme 22 für einen Antriebsmotor 26 (Fig. 16) verbinden. Die Nachleitschaufeln 21 sind Teil eines weiteren Nachleitapparates 23, der Bestandteil der Ventilatoreinheit ist.

Das Schutzgitter 1 mit dem Nachleitapparat 2 wird so auf dem Befestigungsflansch 19 befestigt, dass die Nachleitschaufeln 5 den Nachleitschaufeln 21 der Ventilatoreinheit zugewandt sind. Die Nachleitschaufeln 5, 21 der beiden Nachleitapparate 2, 23 sind so aufeinander abgestimmt, dass bei montiertem Schutzgitter 1 die Nachleitschaufeln 5 im Bereich zwischen den Nachleitschaufeln 21 und dem Schutzgitter 1 liegen.

Aus Fig. 16 ergibt sich der Gesamtaufbau der Ventilatoreinheit mit montiertem Schutzgitter 1. Im zylindrischen Bereich 17 des Gehäuses 14 befindet sich das Lüfterrad 24 mit den Lüfterflügeln 25. Das Lüfterrad 24 wird durch den Antriebsmotor 26 drehbar angetrieben, der in die Aufnahme 22 ragt und in bekannter Weise in der Aufnahme befestigt wird. Der Nachleitapparat 23 ist in Strömungsrichtung der Luft dem Lüfterrad 24 nachgeordnet und ist im Bereich des Diffusors 18 angeordnet. Diesem der Ventilatoreinheit zugehörigen Nachleitapparat 23 ist der am Schutzgitter 1 vorgesehene Nachleitapparat 2 zugeordnet, der sich in Strömungsrichtung der Luft hinter dem Nachleitapparat 23 befindet. Die Nachleitschaufeln 5 haben Abstand von der Innenwand des Diffusors 18. Die Vertiefungen 9 sind aus konstruktiven Gründen an den Nachleitschaufeln 5 vorgesehen, damit sie nicht in Kollision mit der Aufnahme 22 kommen.

Das Schutzgitter 1 hat den Abstand 27 vom rotierenden Lüfterrad 24. Die Größe des Sicherheitsabstandes 27 hat Einfluss auf den Abstand, den die Ringe 3 des Schutzgitters 1 voneinander haben. Je kleiner der Sicherheitsabstand 27 ist, desto kleiner ist auch der Abstand zwischen den Ringen 3 des Schutzgitters. Durch den Nachleitapparat 2 wird sichergestellt, dass bei geringem Sicherheitsabstand 27 und dementsprechend geringem Abstand der Ringe 3 voneinander eine hohe Wurfweite gewährleistet ist. Durch den Nachleitapparat 2 wird erreicht, dass bei Einhaltung der Sicherheitsvorschriften hohe Wurfweiten erreicht werden können.

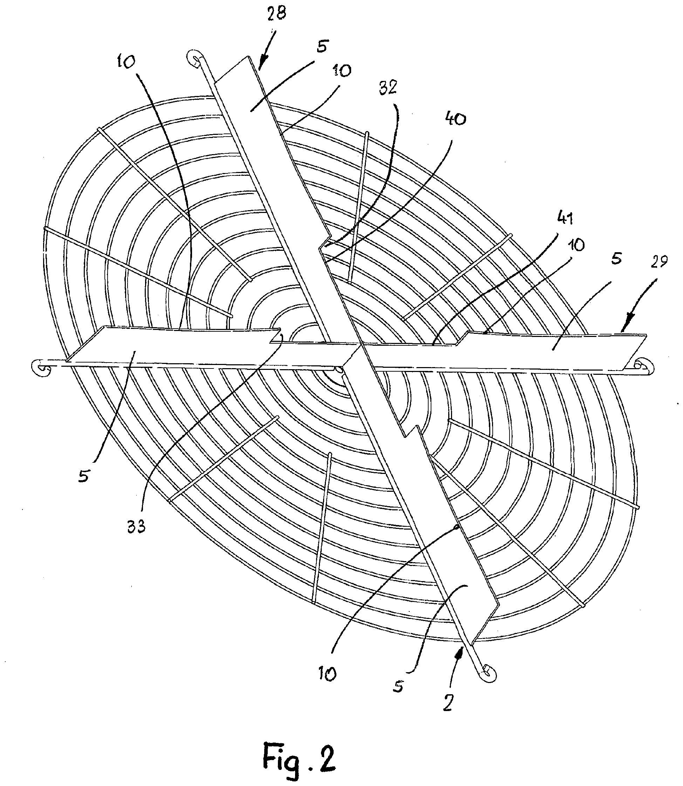

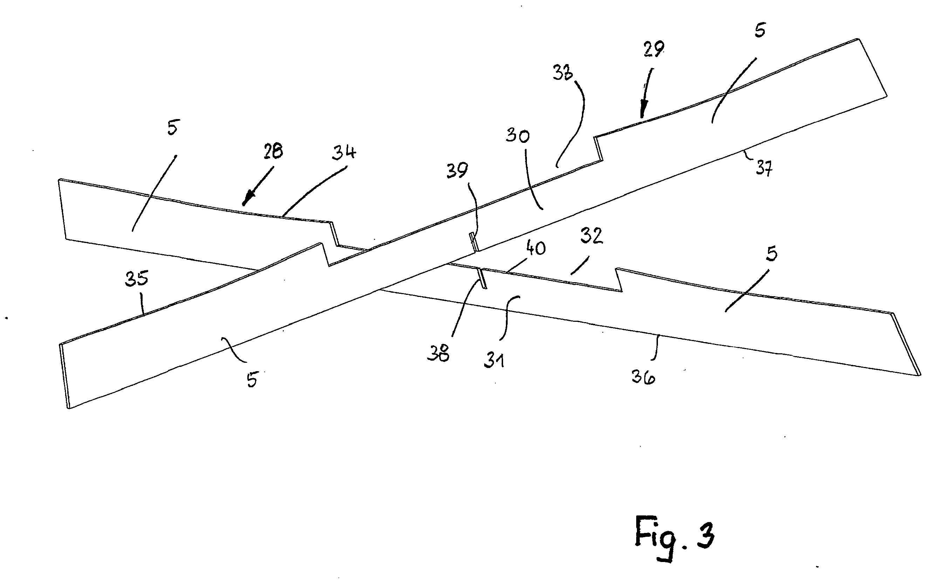

Die Fig. 2 und 3 zeigen eine Ausführungsform, bei der die Nachleitschaufeln 5 wesentlich länger ausgebildet sind als bei der Ausführungsform gemäß Fig. 1. Diametral einander gegenüberliegende Nachleitschaufeln sind einstückig miteinander ausgebildet. Dadurch sind für die vier Nachleitschaufeln 5 nur zwei Bauteile 28, 29 erforderlich. Sie haben jeweils einen schmalen Verbindungsbereich 30, 31, der die beiden Nachleitschaufeln 5 jedes Bauteiles 28, 29 miteinander verbindet. Die beiden Bauteile 28, 29 können aus einem Blech gestanzt werden. Der schmale Verbindungsbereich 30, 31 ergibt sich durch eine Vertiefung 32, 33 in der einen Längsseite 34, 35 der Bauteile 28, 29.

Beide Bauteile 28, 29 weisen in halber Länge jeweils einen Querschlitz 38, 39 auf. Der Querschlitz 38 mündet in den Rand 40 der Vertiefung 32, während der Querschlitz 39 in die Längsseite 37 des Bauteiles 29 mündet.

Beide Querschlitze 38, 39 befinden sich in halber Länge der Vertiefungen 32, 33 und erstrecken sich jeweils über die halbe Höhe der Verbindungsbereiche 30, 31.

Die beiden Bauteile 28, 29 können mit ihren Querschlitzen 38, 39 ineinandergesteckt werden (Fig. 2). Im zusammengebauten Zustand liegen die Ränder 40, 41 der Vertiefungen 32, 33 in einer gemeinsamen Ebene (Fig. 2).

Wie bei der vorigen Ausführungsform liegen auch die Längsseiten 10 der Nachleitschaufeln 5 des Nachleitapparates 2 in einer gemeinsamen Ebene.

Fig. 16 zeigt diese Art von Nachleitschaufeln mit den Verbindungsbereichen, mit denen diametral einander gegenüberliegende Nachleitschaufeln miteinander verbunden sind.

Bei dieser Ausführungsform können die Bauteile 28, 29, sofern sie aus Metall bestehen, sehr einfach durch einen einzigen Stanzvorgang hergestellt werden. Die Bauteile 28, 29, die sich wie die Nachleitschaufeln 5 der Ausführungsform gemäß Fig. 1 senkrecht zum Schutzgitter 1 erstrecken, ermöglichen eine kostengünstige Herstellung und Fertigung des Schutzgitters. Die Bauteile 28, 29 werden in geeigneter Weise auf den stabförmigen Trägern 6 befestigt, vorzugsweise aufgeschweißt.

Wie bei der vorigen Ausführungsform können die Bauteile 28, 29 auch aus Kunststoff bestehen und im Spritzgussverfahren hergestellt werden.

Im Übrigen ist der Nachleitapparat 2 gleich ausgebildet wie bei der Ausführungsform gemäß Fig. 1.

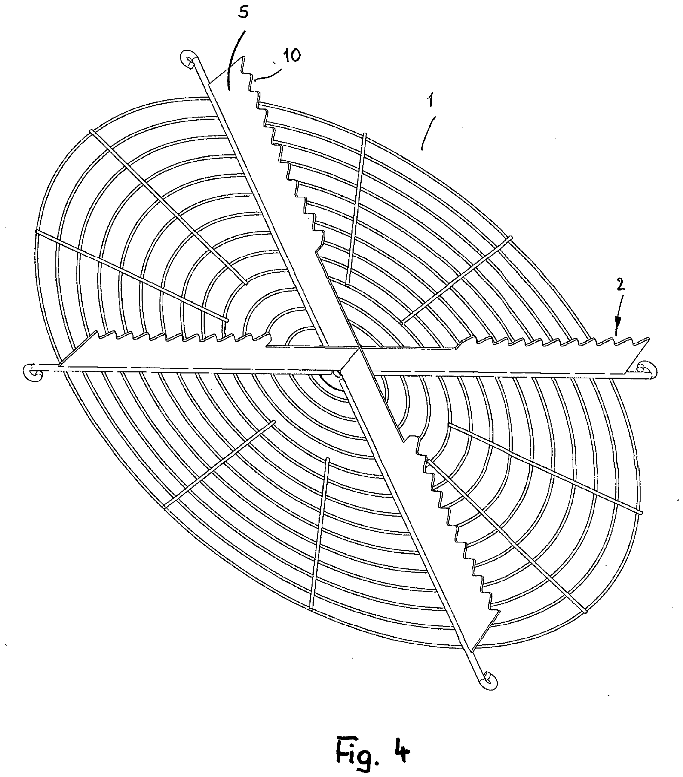

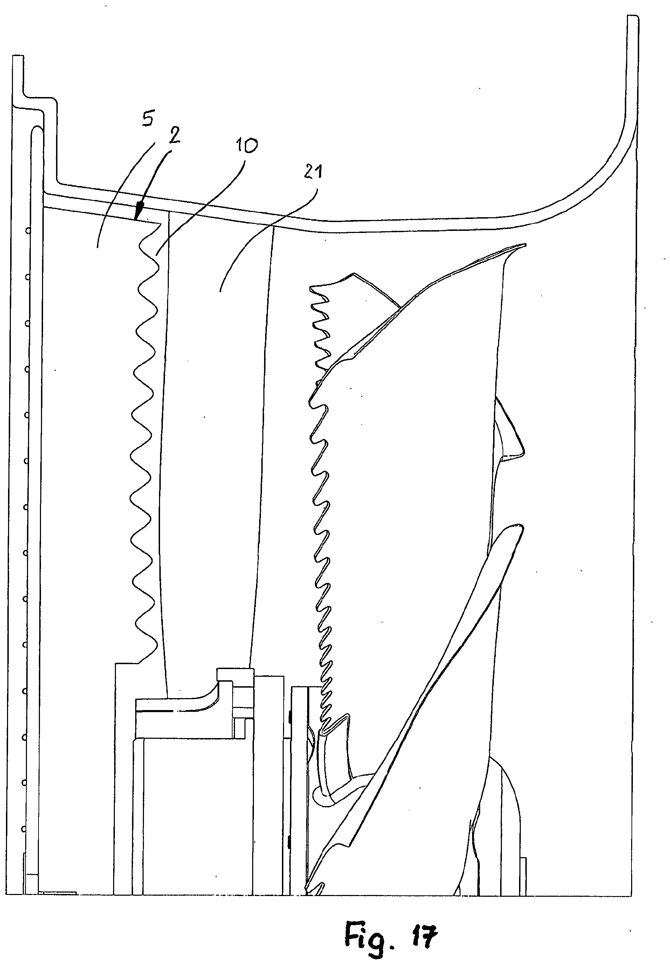

Der Nachleitapparat 2 gemäß Fig. 4 unterscheidet sich von der Ausführungsform gemäß den Fig. 2 und 3 nur dadurch, dass die Längsseite 10 der Nachleitschaufeln 5 gewellt bzw. gezackt ausgebildet ist. Wie aus Fig. 17 hervorgeht, liegt diese profilierte Längsseite 10 der Nachleitschaufeln 5, in Radialrichtung gesehen, den Nachleitschaufeln 21 mit geringem Abstand gegenüber.

Die gewellte bzw. gezackte Ausbildung der dem Luftstrom zugewandten Vorderkante 10 der Nachleitschaufeln 5 ist nur ein Beispiel dafür, wie durch Gestaltung dieser Vorderkante Einfluss auf die Wurfweite und die Akustik der Ventilatoreinheit genommen werden kann.

Der Nachleitapparat gemäß Fig. 4 ist im Übrigen gleich ausgebildet wie die Nachleitapparatur gemäß den Fig. 2 und 3. Die Nachleitschaufeln 5 liegen jeweils in Radialebenen des Schutzgitters 1 und sind gleich ausgebildet.

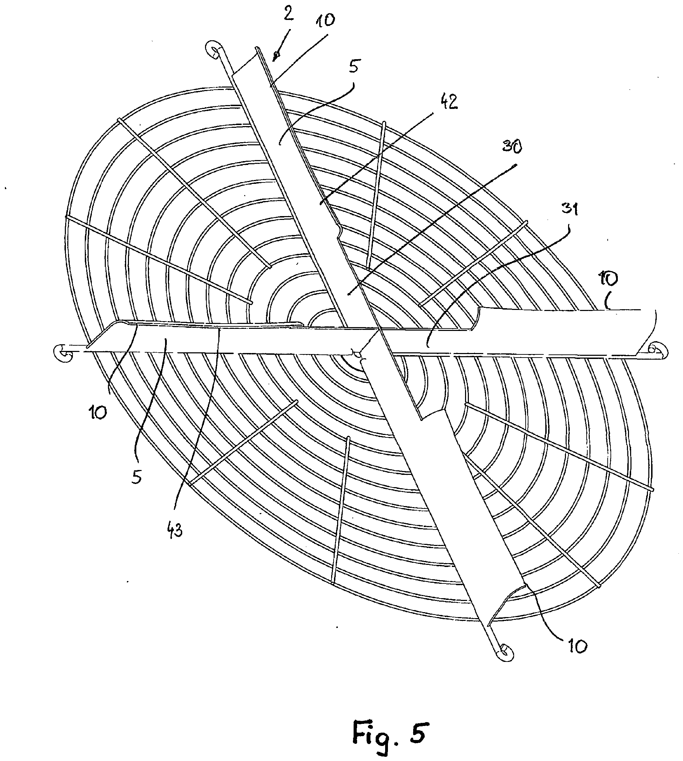

Die Nachleitapparatur 2 gemäß Fig. 5 zeichnet sich dadurch aus, dass die Nachleitschaufeln 5 in dem über den Verbindungsbereich 30, 31 überstehenden Teil über ihre Länge stetig gekrümmt ausgebildet sind. Die gekrümmten Bereiche 42, 43 sämtlicher Nachleitschaufeln 5 sind in die gleiche Richtung gebogen. Selbstverständlich müssen die überstehenden Teile nicht zwingend stetig gekrümmt sein.

Auch auf diese Weise lässt sich Einfluss auf die zu erzielende Wurfweite der Ventilatoreinheit nehmen. Im Übrigen ist die Ausführungsform gemäß Fig. 5 gleich ausgebildet wie das Ausführungsbeispiel gemäß den Fig. 2 und 3.

Eine solche gekrümmte Gestaltung der Nachleitschaufeln 5 kann auch bei der Ausführungsform gemäß Fig. 4 mit der profilierten Längsseite bzw. Vorderkante 10 vorgesehen sein.

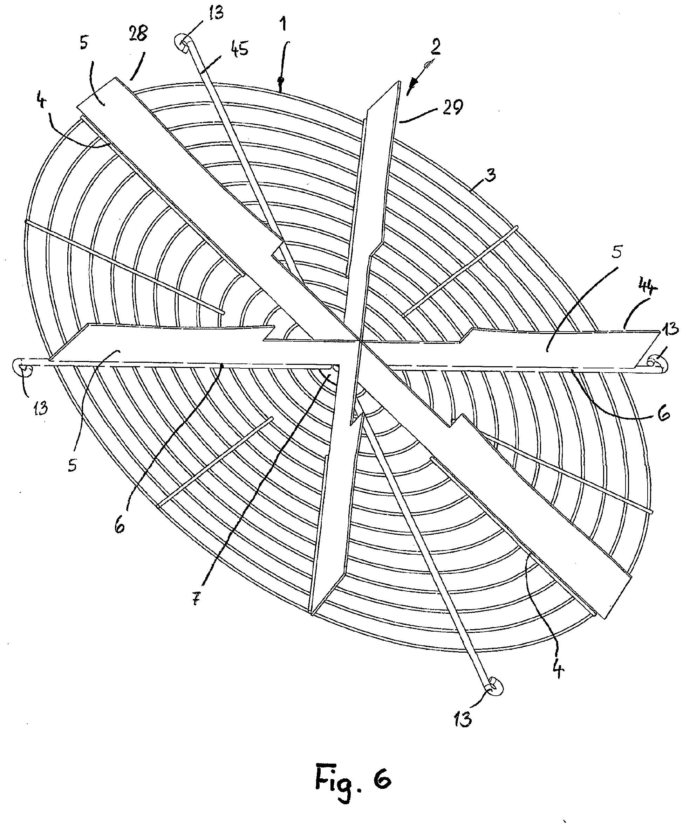

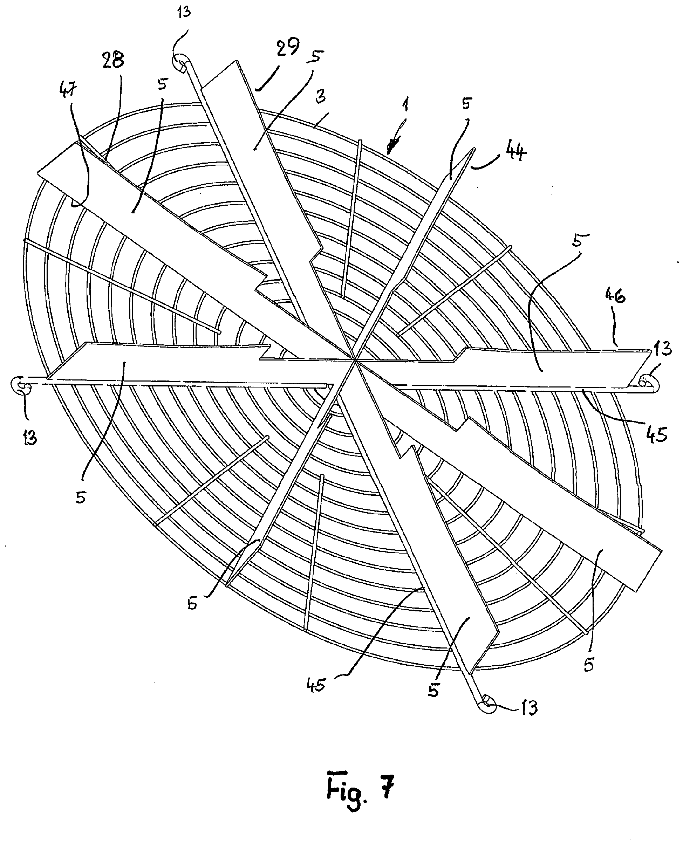

Die Fig. 6 und 7 zeigen jeweils die Möglichkeit, für den Nachleitapparat mehr als zwei Bauteile 28, 29 zu verwenden. Bei der Ausführungsform gemäß Fig. 6 werden drei Bauteile 28, 29, 44 verwendet, die gleich ausgebildet sind wie die Bauteile 28, 29 der Ausführungsform gemäß den Fig. 2 und 3. Die drei Bauteile 28, 29, 44 werden mit Hilfe der Querschlitze lediglich ineinander gesteckt und am Schutzgitter 1 befestigt.

Die drei Bauteile 28, 29, 44 sind in gleichen Winkelabständen zueinander verteilt angeordnet, so dass die Nachleitschaufeln 5 jeweils den gleichen Winkelabstand voneinander haben.

Das Bauteil 44 ist auf den beiden stabförmigen Trägern 6 befestigt, die sich über alle Ringe 3 des Schutzgitters 1 erstrecken und mit ihren radial inneren Enden auf der zentralen Kreisplatte 7 befestigt sind, wie dies auch bei der Ausführungsform gemäß den Fig. 2 und 3 der Fall ist. Die über den äußeren Ring 3 überstehenden Enden der Träger 6 sind zu den Befestigungselementen 13 geformt.

Die beiden anderen Bauteile 28, 29 sind auf den Streben 4 des Schutzgitters 1 befestigt, die sich vom äußeren Ring 3 aus nur über einen Teil des Schutzgitters 1 erstrecken, wie anhand von Fig. 1 beschrieben worden ist. Die Nachleitschaufeln 5 dieser Bauteile 28, 29 sind etwa so lang wie diese Streben 4.

Damit eine sichere Befestigung des Schutzgitters 1 an der Ventilatoreinheit möglich ist, ist das Schutzgitter mit einer zusätzlichen Befestigungsstrebe 45 versehen, die sich diagonal über das Schutzgitter 1 erstreckt und an beiden radial über das Schutzgitter 1 vorstehenden Enden mit den Befestigungselementen 13 versehen ist. Sie werden vorteilhaft durch eine entsprechende Verformung der Strebenenden gebildet und sind gleich ausgebildet wie die Befestigungselemente 13 an den Trägern 6. Die Befestigungsstrebe 45 ist an den Kreuzungspunkten mit den einzelnen Ringen 3 des Schutzgitters 1 fest verbunden, vorzugsweise angeschweißt.

Anstelle der diagonal durchgehenden Befestigungsstrebe 45 können auch zwei getrennte Befestigungsstreben vorgesehen sein, deren radial innere Enden auf der zentralen Kreisplatte 7 befestigt sind. Die Befestigungsstrebe 45 erstreckt sich im Bereich zwischen benachbarten Nachleitschaufeln 5.

Auch bei dieser Ausführungsform können die Nachleitschaufeln 5 entsprechend den Ausführungsformen nach den Fig. 4 und 5 ausgebildet sein.

Bei der Ausführungsform gemäß Fig. 7 sind vier Bauteile 28, 29, 44, 46 vorgesehen, die untereinander gleich ausgebildet sind und dem Ausführungsbeispiel gemäß den Fig. 2 und 3 entsprechen.

Das Bauteil 28 liegt mit seiner einen Längsseite 47 unmittelbar auf den Ringen 3 des Schutzgitters 1 auf und ist mit ihnen in geeigneter Weise verbunden.

Das Bauteil 29 ist auf der Befestigungsstrebe 45 hochkant befestigt. Die mit den Befestigungselementen 13 versehenen Enden der Befestigungsstrebe 45 stehen radial über die Enden des Bauteiles 29 vor.

Das Bauteil 44 ist ebenso wie das Bauteil 28 unmittelbar auf den Ringen 3 des Schutzgitters 1 befestigt. Das Bauteil 46 schließlich sitzt auf einer weiteren Befestigungsstrebe 45, die mit ihren die Befestigungselemente 13 aufweisenden Enden radial über das Bauteil 46 vorsteht.

Das Bauteil 44 schließlich ist wie das Bauteil 28 unmittelbar auf den Ringen 3 des Schutzgitters 1 befestigt.

Die Verteilung der Nachleitschaufeln 5 über den Umfang des Schutzgitters 1 ist regelmäßig, d. h. die Nachleitschaufeln 5 weisen über den Umfang gleiche Abstände voneinander auf. Die Verteilung kann auch unregelmäßig vorgesehen sein, so dass die Nachleitschaufeln 5 über den Umfang des Schutzgitters 1 unterschiedliche Abstände haben.

Sämtliche Bauteile 28, 29, 44, 46 sind stehend angeordnet, wobei die Nachleitschaufeln 5 jeweils in einer Radialebene liegen. Die Nachleitschaufeln können auch eine Ausbildung entsprechend den Fig. 4 und 5 haben.

Wie die beschriebenen Ausführungsbeispiele zeigen, kann die Wurfgeschwindigkeit durch eine entsprechende Gestaltung der Nachleitschaufeln 5 und/oder durch die Anzahl der Nachleitschaufeln optimal an den Anwendungsfall angepasst werden.

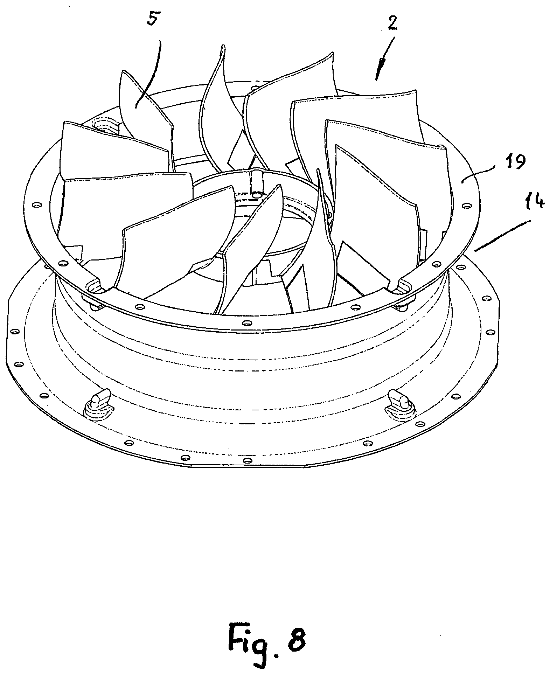

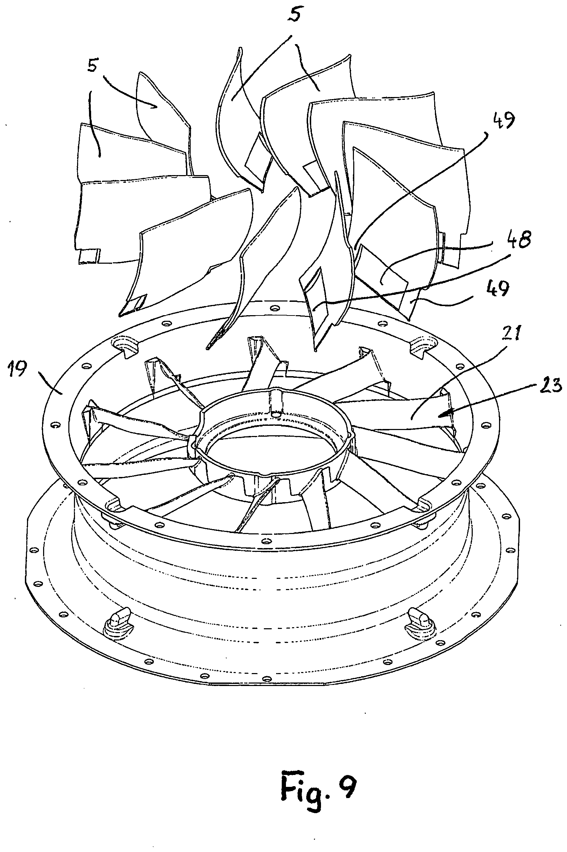

Fig. 8 zeigt anhand einer nicht erfindungsgemäßen Ventilatoreinheit die Möglichkeit, für den zweiten Nachleitapparat 2 einzelne Nachleitschaufeln 5 zu verwenden, die auf die Nachleitschaufeln 21 des ersten Nachleitapparates 23 gesteckt werden (Fig. 9). Der erste Nachleitapparat 23 ist Bestandteil der Ventilatoreinheit, die anhand der Fig. 14 und 15 beschrieben worden ist. Die Ventilatoreinheit gemäß den Fig. 8 und 9 ist gleich ausgebildet wie die Ventilatoreinheit gemäß den Fig. 14 und 15.

Die Nachleitschaufeln 5 werden vorteilhaft im Spritzgussverfahren aus Kunststoff hergestellt und an den Nachleitschaufeln 21 in geeigneter Weise befestigt, beispielsweise aufgesteckt. Hierzu können die Nachleitschaufeln 5 an ihrem Aufsteckbereich beispielsweise mit nebeneinander angeordneten Klemmlaschen 48, 49 (Fig. 9) versehen sein, von denen die randseitigen Klemmlaschen 49 an der einen Seite und die zwischen ihnen liegende Klemmlasche 48 an der anderen Seite der Nachleitschaufel 21 bei montierter Nachleitschaufel 5 liegen. Mit den Klemmlaschen 48, 49 lassen sich die Nachleitschaufeln 5 sicher auf den Nachleitschaufeln 21 befestigen. Die Nachleitschaufeln 5 ragen in montierter Lage axial über den Befestigungsflansch 19 des Gehäuses 14. Vorteilhaft ragen die Nachleitschaufeln 5 jedoch nicht über den Befestigungsflansch 19.

Im Ausführungsbeispiel sind die Nachleitschaufeln 5 über ihre axiale Höhe sowie über ihre radiale Länge jeweils gekrümmt verlaufend ausgebildet. Je nach Einsatzbedingungen können die Nachleitschaufeln 5 auch jede andere geeignete Form haben.

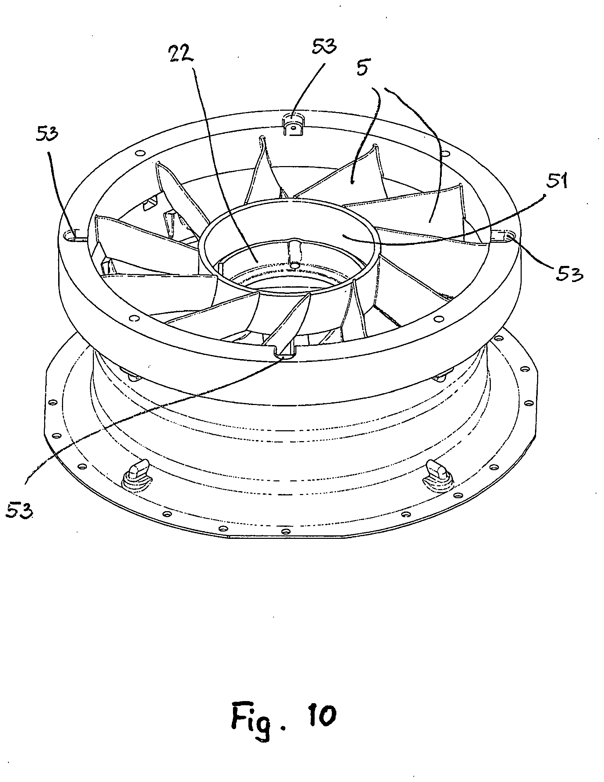

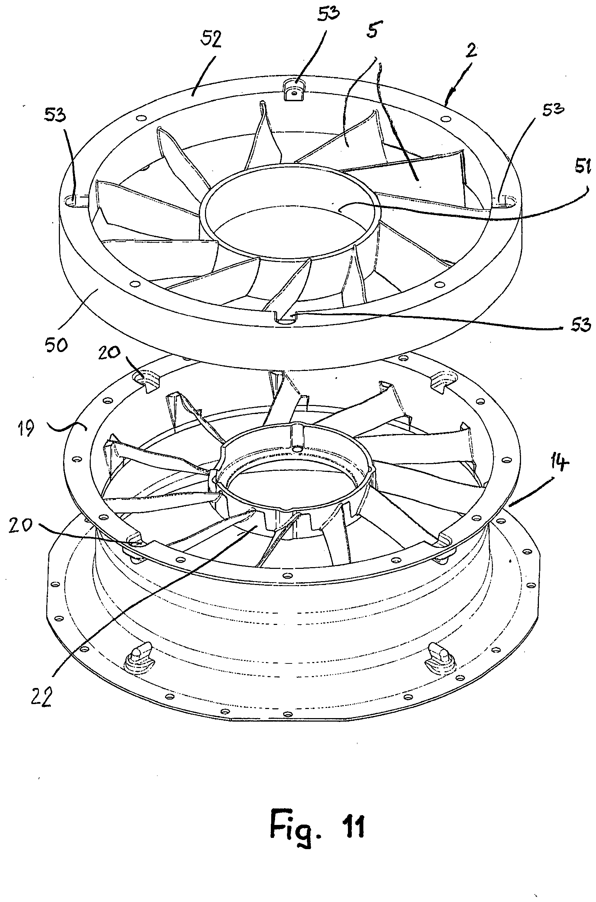

Beim nicht erfindungsgemäßen Ausführungsbeispiel nach den Fig. 10 und 11 befinden sich die Nachleitschaufeln 5 des Nachleitapparates 2 in einem ringförmigen Gehäuse 50, das auf dem Befestigungsflansch 19 des Gehäuses 14 befestigt wird. Die Nachleitschaufeln 5 sind mit ihrem radial äußeren Ende an der Innenwand des Gehäuses 50 und mit ihrem radial inneren Ende an einer ringförmigen Aufnahme 51 befestigt. Die Aufnahme 51 bildet bei montiertem Nachleitapparat 2 eine Fortsetzung der Aufnahme 22 im Gehäuse 14. Das Gehäuse 50 wird auf dem Befestigungsflansch 19 des Gehäuses 14 befestigt. In der Stirnseite 52 des Gehäuses 50 befinden sich Vertiefungen 53, die gleich ausgebildet sind wie die Vertiefungen 20 im Befestigungsflansch 19 des Gehäuses 14. Die Vertiefungen 53 nehmen die Befestigungselemente 13 des Schutzgitters 1 auf, falls auf das Gehäuse 50 ein solches Schutzgitter aufgesetzt werden muss.

Das Gehäuse 50 mit den Nachleitschaufeln 5 und der zylindrischen Aufnahme 51 ist vorteilhaft einstückig als Spritzgussteil ausgebildet.

Da sowohl das Gehäuse 50 als auch das Gehäuse 14 mit den Vertiefungen 20 versehen ist, kann das Schutzgitter wahlweise am Gehäuse 14 oder am Gehäuse 50 befestigt werden. Da das Gehäuse 50 lösbar mit dem Gehäuse 14 verbunden ist, wird das Schutzgitter dann am Gehäuse 14 befestigt, wenn das Gehäuse 50 nicht verwendet wird.

Die Nachleitschaufeln 5 sind so ausgebildet, dass sie an den Nachleitschaufeln 21 anliegen oder der Abstand zwischen ihnen minimal ist, so dass ein möglichst stetiger Übergang zwischen den Nachleitschaufeln 5, 21 entsteht.

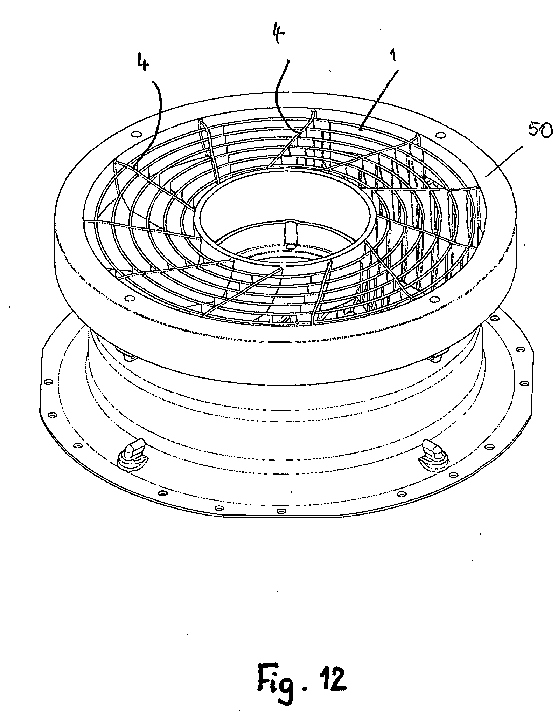

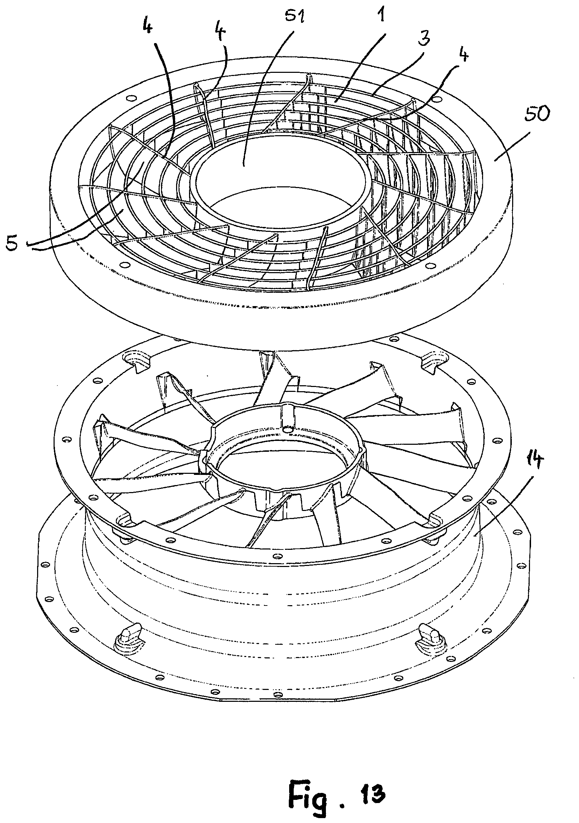

Beim Ausführungsbeispiel gemäß den Fig. 12 und 13 ist das Gehäuse 50 mit dem Schutzgitter 1 versehen, das an der zylindrischen Innenwand des Gehäuses 50 befestigt wird. Das Schutzgitter 1 hat die koaxial zueinander liegenden Ringe 3, die durch quer verlaufende Streben 4 miteinander verbunden sind. Die Nachleitschaufeln 5 sind entsprechend der vorigen Ausführungsform mit dem radial äußeren Ende an der Innenwand des Gehäuses 50 und mit ihrem radial inneren Ende an der Aufnahme 51 befestigt. Das Schutzgitter 1 ist so ausgebildet, dass es mit seinem innersten Ring 3 die zylindrische Aufnahme 51 mit geringem Abstand umgibt, in Draufsicht auf das Gehäuse 50 gesehen.

Bei dieser Ausführungsform ist das Schutzgitter 1 als Berührschutz in das Gehäuse 50 integriert, so dass das Gehäuse 50 keine Vertiefungen 53 in seiner Stirnseite aufweist, wie dies beim Ausführungsbeispiel nach den Fig. 10 und 11 der Fall ist. Das Gehäuse 50 mit dem Schutzgitter 1 bildet somit eine montagefertige Baueinheit, die sich einfach auf dem Gehäuse 14 der Ventilatoreinheit befestigen lässt. Die Ventilatoreinheiten gemäß den Fig. 8 bis 17 haben den Diffusor 18. Das Gehäuse 14 der Ventilatoreinheit kann auch so ausgebildet sein, dass es keinen Diffusorbereich aufweist.

Die Nachleitschaufeln 5 der Fig. 8 bis 13 haben gerade Hinterkanten. Sie können aber auch profiliert sein, wie gewellt oder gezackt.

Die Nachleitschaufeln 21 haben eine maximale Höhe h_{N1max} und die Nachleitschaufeln 5 eine Höhe h_{N2max}. Es hat sich gezeigt, dass sich besonders gute Wurfweiten und Akustikwerte ergeben, wenn das Schaufelhöhenverhältnis H = h_{N1max}/ h_{N2max} zwischen den Nachleitschaufeln 21 und 5 zwischen 0,2 und 2,5, vorzugsweise zwischen 0,4 und 2,0, liegt.

Wie die Fig. 8 bis 17 zeigen, kommt den Nachleitschaufeln 21 des Nachleitapparates 23 eine tragende Funktion für das Lüfterrad 24 bzw. den Antriebsmotor 26 zu. Er wird in der Aufnahme 22 befestigt, die über die Nachleitschaufeln 21 mit dem Gehäuse 14 verbunden wird. Die Ventilatoreinheit kann aber auch so ausgebildet sein, dass die Nachleitschaufeln 21 eine solche Tragfunktion für den Antriebsmotor 26 nicht haben.

Die Ventilatoreinheit 14 ist bei den beschriebenen Ausführungsformen in vorteilhafter Weise einstückig ausgebildet. Besonders vorteilhaft ist es, wenn auch die Nachleitschaufeln 21 zusammen mit der Aufnahme 22 einstückig mit dem Gehäuse 14 ausgebildet ist.

Das Gehäuse kann allerdings auch mehrteilig ausgebildet sein. So lässt sich das Gehäuse 14 beispielhaft auch so gestalten, dass die Einlaufdüse 15 und der anschließende zylindrische Bereich einstückig miteinander ausgebildet sind, während der Diffusor 18 mit dem Befestigungsflansch 19 für sich ebenfalls einstückig ausgebildet ist. Die beiden Teile können dann in bekannter Weise zur Bildung des Gehäuses 14 zusammengesetzt werden.

Auch ist es möglich, die Einlaufdüse 15, den zylindrischen Bereich 17 und den Diffusor 18 aus einem Stück zu fertigen und den Nachleitapparat 23 mit den Nachleitschaufeln 21 und der Aufnahme 22 als getrennte Einheit am Gehäuse 14 zu befestigen.

Die beschriebenen Ausführungsbeispiele zeigen, bereits bestehende Ventilatoreinheiten, die mit dem ersten Nachleitapparat 23 ausgebildet sind, nachträglich mit einem zweiten Nachleitapparat 2 auszustatten, um die Wurfweite der Ventilatoreinheit zu erhöhen. Die Schutzgitter 1 gemäß den Fig. 1 bis 7 sind mit den Nachleitschaufeln 5 des zweiten Nachleitapparates 2 versehen. In diesem Falle ist es lediglich notwendig, an der bestehenden Ventilatoreinheit ein solches Schutzgitter anzubringen, um auf diese Weise den zweiten Nachleitapparat 2 an der Ventilatoreinheit anzubringen. Sollte die bestehende Ventilatoreinheit bereits ein Schutzgitter aufweisen, kann es durch das Schutzgitter gemäß den Fig. 1 bis 7 ersetzt werden.

Bei der Ausführungsform gemäß Fig. 8 ist die nachträgliche Erweiterung der Ventilatoreinheit um den zweiten Nachleitapparat 2 einfach dadurch möglich, dass die einzelnen Nachleitschaufeln 5 an den Nachleitschaufeln 21 des Nachleitapparates 23 der bestehenden Ventilatoreinheit befestigt werden.

Bei den Ausführungsformen gemäß den Fig. 10 bis 13 ist der zweite Nachleitapparat 2 Bestandteil des Gehäuses 50, das auf das Gehäuse 14 einer bestehenden Ventilatoreinheit aufgesetzt wird. Die Nachleitschaufeln 5 des zweiten Nachleitapparates 2 haben hierbei eine tragende Funktion, da sie die Aufnahme 51 für den Antriebsmotor 26 mit dem Gehäuse 50 verbinden.

## Patentansprüche

1. Ventilatoreinheit mit wenigstens einem Ventilator, der in einem Gehäuse untergebracht ist, in dem sich ein dem Ventilator zugeordneter erster Nachleitapparat (23) befindet, der über den Umfang verteilt angeordnete Nachleitschaufeln (21) aufweist und dem ein weiterer Nachleitapparat (2) zugeordnet ist, der im Strömungsweg der angesaugten Luft hinter dem ersten Nachleitapparat (23) liegt, weitere Nachleitschaufeln (5) aufweist und Teil eines Schutzgitters (1) ist, wobei das Schaufelhöhenverhältnis H = h_{N1max}/ h_{N2max} zwischen 0,2 und 2,5, vorzugsweise zwischen 0,4 und 2, liegt, wobei h_{N1max} die maximale Höhe der Nachleitschaufeln (21) im Gehäuse (14) und h_{N2max} die maximale Höhe der weiteren Nachleitschaufeln (5) ist,
**dadurch gekennzeichnet, dass**
die weiteren Nachleitschaufeln (5) zumindest über einen Teil ihrer Länge auf wenigstens einem stabförmigen Träger (6) angeordnet sind, der koaxial zueinander liegende Ringe (3) des Schutzgitters (1) miteinander verbindet.

2. Ventilatoreinheit nach Anspruch 1,
**dadurch gekennzeichnet, dass** die weiteren Nachleitschaufeln (5) in Strömungsrichtung der Luft im Wesentlichen hochkant angeordnet sind.

3. Ventilatoreinheit nach einem der Ansprüche 1 bis 2,
**dadurch gekennzeichnet, dass** die weiteren Nachleitschaufeln (5) aus Blechteilen oder aus Kunststoffteilen gebildet sind.

4. Ventilatoreinheit nach einem der Ansprüche 1 bis 3,
**dadurch gekennzeichnet, dass** die weiteren Nachleitschaufeln (5) eben ausgebildet sind.

5. Ventilatoreinheit nach einem der Ansprüche 1 bis 3,
**dadurch gekennzeichnet, dass** die weiteren Nachleitschaufeln (5) zumindest im Bereich ihrer dem Luftstrom zugewandten Vorderkante (10) gekrümmt verlaufen.

6. Ventilatoreinheit nach einem der Ansprüche 1 bis 5,
**dadurch gekennzeichnet, dass** die dem Luftstrom zugewandte Vorderkante (10) der weiteren Nachleitschaufeln (5) gerade verläuft.

7. Ventilatoreinheit nach einem der Ansprüche 1 bis 5,
**dadurch gekennzeichnet, dass** die dem Luftstrom zugewandte Vorderkante (10) der weiteren Nachleitschaufeln (5) profiliert ist.

8. Ventilatoreinheit nach einem der Ansprüche 1 bis 7,
**dadurch gekennzeichnet, dass** zwei diametral einander gegenüber liegende weitere Nachleitschaufeln (5) einstückig miteinander ausgebildet sind.

9. Ventilatoreinheit nach Anspruch 8,
**dadurch gekennzeichnet, dass** die einander gegenüber liegenden weiteren Nachleitschaufeln (5) Teil einer flachen Leiste (28, 29, 44, 46) sind.

10. Ventilatoreinheit nach Anspruch 9,
**dadurch gekennzeichnet, dass** die Leisten (28, 29, 44, 46) in halber Länge einander kreuzend miteinander verbunden sind und sich vorzugsweise über die ganze Breite bzw. über den ganzen Durchmesser des Schutzgitters (1) erstrecken.

## Claims

1. A ventilator unit having at least one ventilator, which is accommodated in a housing, in which a first diffuser apparatus (23) is located, which diffuser apparatus is assigned to the ventilator and has diffuser blades (21), which are arranged in a distributed manner over the circumference, and to which diffuser apparatus a further diffuser apparatus (2) is assigned, which lies behind the first diffuser apparatus (23) in the flow path of the intake air, has further diffuser blades (5) and is part of a protective grating (1), the blade height ratio H = h_{N1max}/h_{N2max} lying between 0.2 and 2.5, preferably between 0.4 and 2, h_{N1max} being the maximum height of the diffuser blades (21) in the housing (14) and h_{N2max} being the maximum height of the further diffuser blades (5),
**characterized in that**
the further diffuser blades (5) are arranged, at least over a part of their length, on at least one rod-shaped support (6), which connects rings (3) of the protective grating (1) to one another, which rings lie coaxially to one another.

2. The ventilator unit according to Claim 1,
**characterized in that** the further diffuser blades (5) are arranged substantially edgeways in the flow direction of the air.

3. The ventilator unit according to one of Claims 1 to 2,
**characterized in that** the further diffuser blades (5) are formed from sheet metal parts or from plastic parts.

4. The ventilator unit according to one of Claims 1 to 3,
**characterized in that** the further diffuser blades (5) are constructed to be flat.

5. The ventilator unit according to one of Claims 1 to 3,
**characterized in that** the further diffuser blades (5) run in a curved manner at least in the region of their front edge (10) which faces the airflow.

6. The ventilator unit according to one of Claims 1 to 5,
**characterized in that** the front edge (10) of the further diffuser blades (5), which faces the airflow, runs straight.

7. The ventilator unit according to one of Claims 1 to 5,
**characterized in that** the front edge (10) of the further diffuser blades (5), which faces the airflow, is profiled.

8. The ventilator unit according to one of Claims 1 to 7,
**characterized in that** two further diffuser blades (5), which lie diametrically opposite one another, are constructed in one piece with one another.

9. The ventilator unit according to Claim 8,
**characterized in that** the further diffuser blades (5), which lie opposite one another, are part of a flat strip (28, 29, 44, 46).

10. The ventilator unit according to Claim 9,
**characterized in that** the strips (28, 29, 44, 46) are connected to one another such that they intersect with one another at half their length and preferably extend over the entire width or the entire diameter of the protecting grating (1).

## Revendications

1. Unité de ventilateur comportant au moins un ventilateur, qui est renfermé dans un carter, dans lequel se trouve un premier dispositif de diffuseur (23) associé au ventilateur, qui présente des aubes directrices (21) réparties sur la circonférence et auquel en outre un dispositif de diffuseur (2) supplémentaire est associé, qui se trouve dans le trajet d'écoulement de l'air aspiré derrière le premier dispositif de diffuseur (23), présente des aubes directrices (5) supplémentaires et fait partie d'une grille de protection (1), dans laquelle le rapport de hauteur d'aube
H=_{hN1max}/h_{N2max} est compris entre 0,2 et 2,5, de préférence entre 0,4 et 2, dans laquelle hN1max est la hauteur maximale des aubes directrices (21) dans le carter (14) et hN2max est la hauteur maximale des aubes directrices supplémentaires (5), **caractérisée en ce que** les aubes directrices supplémentaires (5) sont disposés au moins sur une partie de leur longueur sur au moins un support en forme de tige (6), qui relie les uns aux autres des anneaux (3) de la grille de protection (1) coaxiaux entre eux.

2. Unité de ventilateur selon la revendication 1,
**caractérisée en ce que** les aubes directrices supplémentaires (5) sont disposées essentiellement sur le bord dans la direction d'écoulement de l'air.

3. Unité de ventilateur selon une des revendications 1 à 2,
**caractérisée en ce que** les aubes directrices supplémentaires (5) sont formées de pièces en tôle ou de pièces en matière plastique.

4. Unité de ventilateur selon une des revendications 1 à 3,
**caractérisée en ce que** les aubes directrices supplémentaires(5) sont plates.

5. Unité de ventilateur selon une des revendications 1 à 3,
**caractérisée en ce que** les aubes directrices supplémentaires (5) sont incurvées au moins dans la zone de leur bord avant (10) faisant face au flux d'air.

6. Unité de ventilateur selon une des revendications 1 à 5,
**caractérisée en ce que** le bord avant (10) des aubes directrices supplémentaires (5) faisant face au flux d'air est rectiligne.

7. Unité de ventilateur selon une des revendications 1 à 5,
**caractérisée en ce que** le bord avant (10) des aubes directrices supplémentaires (5) faisant face au flux d'air est profilé.

8. Unité de ventilateur selon une des revendications 1 à 7,
**caractérisée en ce que** deux aubes directrices supplémentaires (5) diamétralement opposées sont formées en un seul tenant l'une avec l'autre.

9. Unité de ventilateur selon la revendication 8,
**caractérisée en ce que** les aubes directrices supplémentaires (5) se faisant face font partie d'une bande plate (28, 29, 44, 46).

10. Unité de ventilateur selon la revendication 9,
gueur sont reliées les unes aux autres en se croisant et de préférence s'étendent sur la totalité de la largeur ou sur la totalité du diamètre de la grille de protection (1).
